## Europäisches Patentamt

## European Patent Office

## Office européen des brevets

(11) Numéro de publication: **0 166 643**
**A1**

(12) **DEMANDE DE BREVET EUROPEEN**

(21) Numéro de dépôt: **85401070.9**

(22) Date de dépôt: **30.05.85**

(51) Int. Cl.⁴: **H 02 M 3/335**

(30) Priorité: **30.05.84 FR 8408490**

(43) Date de publication de la demande: **02.01.86**
**Bulletin 86/1**

(84) Etats contractants désignés: **BE DE GB IT NL**

(71) Demandeur: **COMPAGNIE D'INFORMATIQUE MILITAIRE SPATIALE ET AERONAUTIQUE, 25, rue de Courcelles, F-75008 Paris (FR)**

(72) Inventeur: **Arnould, Guy, THOMSON-CSF SCPI 173, bld. Haussmann, F-75379 Paris Cedex 08 (FR)**

(74) Mandataire: **Benoit, Monique et al, THOMSON-CSF SCPI 173, Bld Haussmann, F-75379 Paris Cedex 08 (FR)**

(54) Alimentation à découpage de puissance.

(57) Alimentation à découpage de puissance comportant un ensemble de modules à découpage (C1 à Cn) connectés en parallèles et un dispositif de déphasage (DP) permettant de déphaser les courants d'entrée des modules (C1 à Cn) de sorte que le déphasage entre un premier module et un ième module soit égal à $\frac{iT}{n}$, T étant la période de récurrence du signal à découpage, afin d'effectuer un filtrage des parasites de forte amplitude.

Application aux alimentations à découpage.

ACTORUM AG

## ALIMENTATION A DECOUPAGE DE PUISSANCE

La présente invention concerne les alimentations à découpage de puissance, et plus particulièrement les alimentations à découpage modulaires, comprenant un ensemble de modules identiques connectés en parallèle.

Les alimentations à découpage de puissance comportent un filtre réseau placé en amont du convertisseur à découpage pour filtrer les tensions parasites que les alimentations provoquent sur le réseau.

En effet, généralement afin d'augmenter le rendement, on choisit une fréquence de travail élevé et des temps de commutation aussi courts que possible, ce qui donne lieu, dans le domaine des fréquences, à un très large spectre de perturbation de forte amplitude. Ce spectre est provoqué par les flancs rapides de commutation dans les alimentations. Ainsi, les alimentations à découpage créent des courants induits sur le réseau. Or ces courants sont limités contractuellement par des normes qui fixent l'amplitude du courant toléré en fonction de la fréquence. Pour les fréquences fondamentales et les premières harmoniques, la limite tolérée varie en sens inverse de la fréquence indépendamment de la puissance de l'alimentation.

Les filtres réseau sont conçus pour éliminer ces parasites. Ils sont d'autant plus encombrants que l'alimentation a une puissance élevée. Par ailleurs, ils doivent être d'autant plus efficaces que la puissance de travail (fréquence de découpage) de l'alimentation est élevée.

L'encombrement du filtre dépend donc essentiellement de la puissance de l'alimentation et de la fréquence de découpage. Par ailleurs, il est connu qu'une alimentation à découpage est un excellent transformateur d'énergie car, en effet, la puissance fournie par l'alimentation est sensiblement égale à la puissance fournie par le réseau. En conséquence, le courant moyen absorbé par l'alimentation varie en sens inverse de la tension du réseau, l'impédance d'entrée de l'alimentation a donc une caractéristique négative. Or l'association d'une cellule de filtrage de type LC utilisée classiquement dans les dispositifs du filtrage d'antiparasitage du réseau, et d'une telle impédance peut constituer un système instable lorsque la fréquence de coupure du filtre se trouve dans la bande passante de l'alimentation. Il est par conséquent difficile d'augmenter la bande passante du filtre sans provoquer une instabilité de l'alimentation.

La présente invention a pour objet une alimentation à découpage de puissance constituée par n modules identiques connectés en parallèle et alimentés par le courant réseau. L'amplitude du courant traversant chaque module est divisée par n, ceci a pour premier effet de réduire considérablement l'encombrement de l'alimentation. Chaque module est constitué par un convertisseur à découpage. Les parasites de fortes amplitudes sont directement éliminés au niveau des convertisseurs à découpage par un entrelacement des impulsions commandé par un déphasage du courant impulsionnel agissant sur ces convertisseurs. Un filtre réseau est placé en amont des convertisseurs. Comme les parasites de forte amplitude sont éliminés au niveau des convertisseurs, le filtre, peut de ce fait, être réalisé indépendamment de la puissance de l'alimentation, sa taille peut par conséquent être considérablement réduite. Le filtre permet d'obtenir un découplage entre le réseau et l'alimentation et également de masquer l'impédance d'entrée négative d'alimentation en présentant une impédance de sortie positive.

L'invention a donc pour objet une alimentation à découpage de puissance, comportant un ensemble de n modules à découpage connectés en parallèle et commandés par un signal à découpage, principalement caractérisé en ce qu'elle comprend un dispositif de déphasage permettant de déphaser les courants d'entrée des modules de sorte que le déphasage entre un premier module et un ième module soit égal à $\frac{iT}{n}$ , T étant la période de récurrence du signal à découpage, afin d'effectuer un entrelacement des courants de sorties des modules filtrant ainsi les parasites de forte amplitude.

L'invention sera mieux comprise à l'aide de la description ci-après, donnée à titre d'exemple non limitatif et illustrée par les dessins annexés sur lesquels :

- la figure 1 représente le schéma général d'une alimentation à découpage de puissance selon l'invention ;

- la figure 2 représente une réalisation particulière d'un filtre réseau selon la figure 1 ;

- la figure 3 représente une réalisation particulière d'un convertisseur à découpage selon la figure 1 ;

- la figure 4 représente le détail de réalisation de l'asservissement en courant et en tension selon la figure 1.

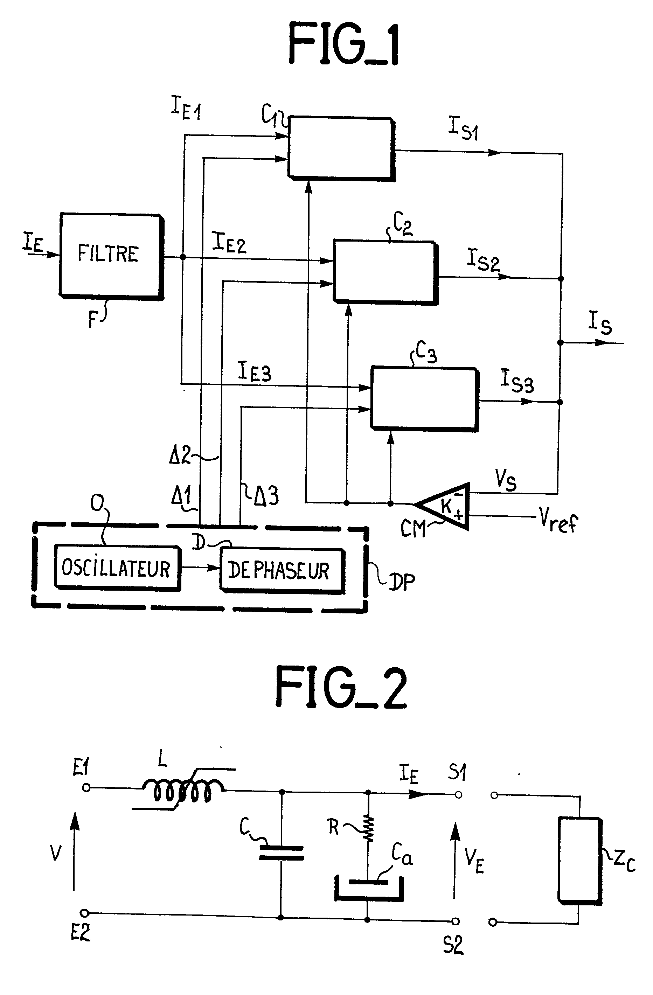

Sur la figure 1, on a donc représenté la structure générale d'une alimentation à découpage de puissance selon l'invention.

Cette alimentation est une alimentation modulaire constituée de modules identiques de puissance P/n mis en parallèle pour fournir globalement une puissance P. Le nombre de modules en parallèle est quelconque, mais toutefois limité par une question de coût et de rentabilité de la modularité qui a pour but de réduire l'encombrement des filtres réseau et qui, lorsque le rapport de puissance entre un module et l'alimentation dépasse 10 environ, devient inefficace. Pour simplifier la représentation on a pris n = 3, et référencé C1 à C3 les trois modules représentés.

L'alimentation reçoit du réseau électrique un courant $I_E$. Ce courant $I_E$ est tout d'abord filtré par un filtre réseau F, le courant de sortie se divise en autant de branches qu'il y a de modules C1 à C3 à alimenter. Chaque courant $I_{E1}$, $I_{E2}$, $I_{E3}$ est constitué d'impulsions de même amplitude et de même fréquence de répétition. Les modules sont constitués par des convertisseurs à découpage C1 à C3 qui sont commandés en courant par un amplificateur d'erreur CM afin d'obtenir un courant impulsionnel identique dans chacun d'eux. Un circuit de commande de déphasage DP comporte un oscillateur O qui fixe la fréquence des impulsions, suivi d'un déphaseur D qui délivre des signaux $\Delta 1$ à $\Delta 3$ permettant d'introduire un décalage de phase constant entre les courants de commande de deux convertisseurs référencés consécutivement C1, et C2 et/ou C2 et C3 dans notre exemple. Ce décalage est égal à $T/n$. De manière générale, si n est le nombre de convertisseurs à découpage et si on appelle voie de rang i, i étant égal à 1, 2 ... n, l'entrée en courant d'un convertisseur référencé $C_i$, alors le retard de la voie de rang i par rapport à la voie de rang 1 est égal à $iT/n$.

Le décalage de phase du courant impulsionnel permet d'éliminer les harmoniques de rang inférieur à nf. Car en effet, ce décalage de phase provoque un entrelacement des impulsions des courants de sortie qui élimine les harmoniques de rang inférieur à nf ; l'alimentation travaille donc à une fréquence de découpage égale à nf. De plus du fait de la modularité, l'amplitude du courant résiduel est inversement proportionnelle au nombre de modules pour fournir une même puissance.

Pour stabiliser les niveaux de sortie, l'amplitude des impulsions de chaque module est asservie à une référence commune à l'aide d'un comparateur CM qui reçoit à une entrée la tension de référence Vréf et à l'autre entrée la tension de sortie VS de l'alimentation et qui délivre la tension de correction $K\varepsilon$, K étant le facteur d'amplification.

Afin de mettre en évidence le phénomène d'entrelacement des impulsions obtenues par déphasage du courant de commande à découpage on rappelle que le spectre en fréquence d'un signal périodique s'exprime par la relation (1) :

$$\sum_{k=1}^{\infty} \left| Ck \right| = \Sigma \frac{A \sin k \cdot \frac{T_{on}}{T}}{k} \qquad (1)$$

Cette relation a une borne supérieure égale à : $\Sigma \frac{A}{\pi} \cdot \frac{1}{k}$ (2)

Le terme A représente l'amplitude de l'impulsion, T représente la période de répétition du signal à découpage, $T_{on}$ représente la longueur de l'impulsion, k représente le rang de l'harmonique.

Ainsi l'enveloppe des harmoniques décroît proportionnellement au rang qu'il occupe lorsque $T_{on}/T$ varie.

Si on considère l'amplitude et la phase de l'harmonique de rang k pour un régulateur de rang i, alors le coefficient de la série de Fourier s'écrit :

$$Ck = \frac{A}{nk\pi} \cdot e^{j\omega kt} \cdot e^{-jk\pi\frac{i}{n}\omega T} \qquad (3)$$

soit :

$$Ck = A(k)\, e^{j\omega kt} \cdot e^{-j2k\pi\frac{i}{n}} \qquad (4)$$

Pour cet harmonique, la résultante obtenue en considérant tous les régulateurs est :

$$Ck = A(k)\, e^{j\omega kt} \cdot \sum_{i=1}^{n} e^{-j2k\pi\frac{i}{n}} \qquad (5)$$

Or deux cas se présentent suivant que le terme exprimant l'amplitude résultante d'un harmonique de rang k est différent ou égal à 1. En effet l'expression de la somme donnant la résultante de l'amplitude de cet harmonique est nulle pour les harmoniques de rang n-1 et leurs multiples, la résultante est égale à 1 pour les harmoniques multiples de n, alors la résultante obtenue est égale à : $\frac{A}{k\pi}$.

Cette expression représente l'amplitude de la raie principale d'un module unique fournissant la puissance des n modules mis en parallèle (ce résultat étant rappelé par la relation 2). La combinaison des modules en parallèles donne par conséquent un courant efficace identique à celui qu'on obtiendrait avec une alimentation monolithique et une fréquence de découpage multipliée par le nombre de module.

Une conséquence de ces résultats est une banalisation de la conception des filtres réseau puisque les composants constituant ces filtres voient un même courant efficace quelle que soit la puissance de l'alimentation.

Sur la figure 2 on a représenté une réalisation particulière d'un filtre réseau F selon l'invention. Ce filtre comprend deux bornes d'entrée E1, E2 sur lesquelles on applique la tension réseau V. Une self inductance L, par exemple, non linéaire ayant donc une loi de variation de l'inductance variant en fonction du courant qui la traverse, est reliée à la borne E1. La non linéarité permet d'obtenir un changement de la fréquence de coupure du filtre lorsqu'on augmente le nombre de module et que, par conséquent, le courant dans chaque filtre diminue. Un condensateur C est connecté en parallèle. Une cellule d'amortissement est connectée en parallèle sur le condensateur C. Cette cellule comprend une résistance R, dont une borne est reliée à une borne de sortie S1 en série avec un condensateur polarisé Ca, dont la borne négative est reliée à la résistance R et, dont la borne positive est reliée à la sortie S2. On a également représenté sur cette figure la charge Zc qui représente l'impédance d'entrée d'un convertisseur à découpage. La cellule d'amortissement est choisie de manière à présenter une résistance positive pour neutraliser l'impédance négative du filtre. Ainsi la présence de cette cellule permet au filtre d'avoir une impédance d'entrée résistive. Les valeurs de la résistance R et du condensateur Ca sont choisis pour remplir ces conditions, à savoir Ca doit être cinq à dix fois plus grand que C, et Ra doit être inférieur ou égal au module de l'impédance d'entrée d'un convertisseur. Ainsi, à basse fréquence, le condensateur Ca présente un chemin de moindre impédance.

On a pris pour la valeur de la résistance la valeur correspondant au rapport de la tension minimale appliquée à l'entrée $Ve_{min}$ et du courant maximal pouvant circuler $I_{max}$ soit :
$Ra = Ve_{min}/I_{max}$. Connaissant la puissance de chaque alimentation modulaire qui est égale à P/n, la valeur de la résistance Ra est donc

égale à $Ve^2_{min/n}$.

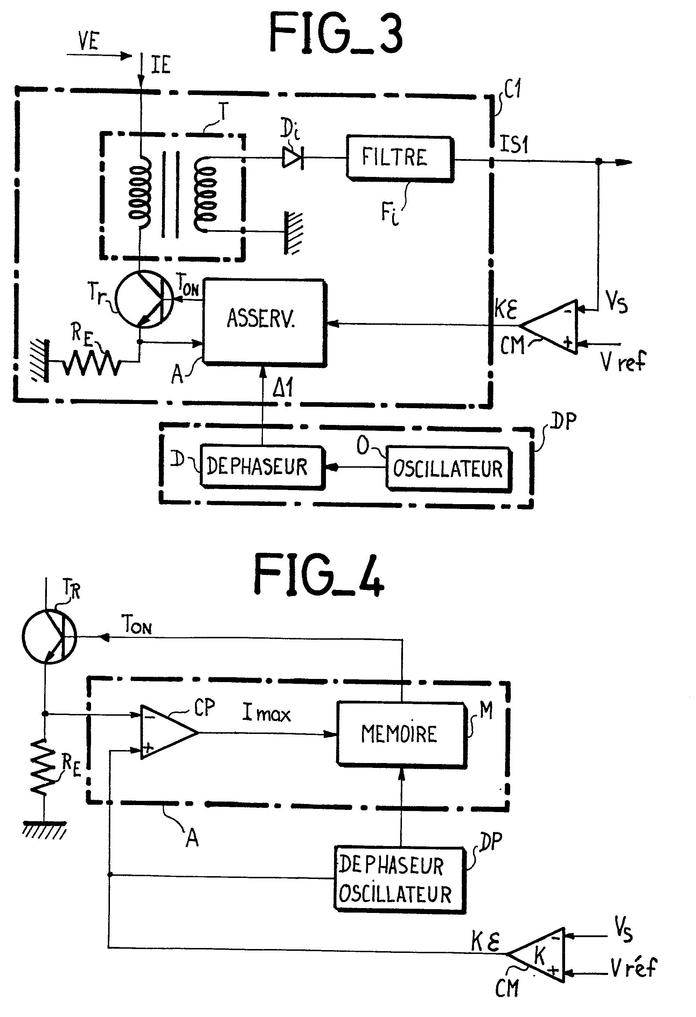

Le convertisseur à découpage représenté sur la figure 3 est classique en soi. Ce convertisseur comprend un transformateur T dont une borne primaire est reliée à la borne d'alimentation + Ve, l'autre borne reçoit les impulsions de courant issu du collecteur d'un transistor $T_r$ à découpage. L'émetteur du transistor NPN est relié à la masse, la base de ce transistor reçoit le signal de commande à découpage $T_{on}$ délivré par un dispositif d'asservissement A qui reçoit le signal de déphasage correspondant, $\Delta 1$ dans cet exemple, et la tension d'erreur $K\varepsilon$. Le déphasage pour chacun des signaux de commande $T_{on}$ de chaque convertisseur peut être obtenu par des déphaseurs D classiques en soi qui opèrent le décalage de phase égal à $\frac{T}{n}$ soit un déphasage égal à $\frac{iT}{n}$ pour un convertisseur de rang i par rapport au premier convertisseur.

Pour détecter les impulsions une borne du secondaire du transformateur T est reliée à une diode Di, l'autre borne est reliée à la masse. La diode Di est suivie d'un filtre Fi permettant d'obtenir des impulsions présentant les caractéristiques requises pour l'exploitation.

Le convertisseur comporte également un dispositif d'asservissement A en courant permettant de réaliser une stabilisation du courant maximal circulant dans le convertisseur.

Sur la figure 4 on a représenté le détail de réalisation du dispositif d'asservissement en courant maximal $I_{max}$ et en tension et le dispositif de déphasage selon l'invention.

L'asservissement en courant est réalisé à l'aide d'un comparateur CP qui reçoit sur son entrée négative une tension proportionnelle au courant dans le transistor de commutation $T_r$ et la tension d'erreur $K\varepsilon$ sur son entrée positive. Lorsque le courant maximal de consigne $I_{max}$ est atteint, le comparateur CP provoque le blocage du transistor $T_r$. Une mémoire M maintient le blocage jusqu'à l'impulsion de synchronisation suivante, cette impulsion étant fournie par l'oscillateur déphaseur.

En conclusion, l'alimentation selon l'invention présente l'avantage de réaliser au moyen de l'action du déphaseur DP sur les courants impulsionnels d'entrée, un filtrage efficace des parasites de forte amplitude. Le filtre réseau placé en amont des convertisseurs à découpage C1-C3, à un encombrement beaucoup plus réduit puisque cet encombrement ne dépend plus de la puissance de l'alimentation.

# R E V E N D I C A T I O N S

1. Alimentation à découpage de puissance comportant un ensemble de modules à découpage (C1 à Cn) connectés en parallèle et commandés par un signal à découpage, caractérisée en ce qu'elle comprend un dispositif de déphasage (DP) permettant de déphaser les courants d'entrée des modules (C1 à Cn) de sorte que le déphasage entre un premier module et un ième module soit égal à $\frac{iT}{n}$, T étant la période de récurrence du signal à découpage, afin d'effectuer un entrelacement des courants de sortie des modules filtrant ainsi les parasites de forte amplitude.

2. Alimentation à découpage selon la revendication 1, caractérisée en ce que le dispositif de déphasage (DP) comprend un oscillateur (O) fournissant le signal de commande à découpage suivi d'un déphaseur (D) permettant à partir de ce signal de délivrer des signaux de commande de déphasage pour chaque commande de module.

3. Alimentation à découpage selon la revendication 1, caractérisée en ce que chaque module (C1 - Cn) comprend un convertisseur à découpage (C1 à Cn).

4. Alimentation selon la revendication 3, caractérisée en ce que chaque convertisseur (C1 à Cn) à sa tension de sortie (VS) régulée par un comparateur (CM) recevant cette tension de sortie (VS) et une tension de référence (Vréf) et délivrant une tension d'erreur (K ε).

5. Alimentation selon l'une quelconque des revendications 1 à 4, caractérisée en ce qu'elle comprend un transformateur (T), un transistor NPN à découpage ($T_R$) dont le collecteur est relié à une borne du primaire du transformateur et dont l'émetteur est relié par l'intermédiaire d'une résistance (RE) à la masse, une diode Di reliée à une borne du secondaire, un filtre (Fi) relié à la cathode de la diode (Di), un dispositif d'asservissement (A) en courant relié à la base du transistor et à son émetteur et à la sortie du comparateur (CM).

6. Alimentation selon l'une quelconque des revendications 1 à 5, caractérisée en ce que le dispositif d'asservissement (A) comprend un comparateur (CP) suivi d'une mémoire programmable (M), la mémoire (M) recevant le courant maximal du comparateur (CP) et bloquant les impulsions de commande du transistor jusqu'à la réception d'une impulsion de synchronisation issue du dispositif de déphasage (DP).

7. Alimentation selon l'une quelconque des revendications 1 à 6, caractérisée en ce qu'elle comporte un filtre réseau (F) en amont des convertisseurs (C1 à Cn).

8. Alimentation selon la revendication 7, caractérisée en ce que le filtre (F) comprend une cellule d'amortissement RCa connectée entre les deux sorties (S1, S2) du filtre pour masquer l'impédance d'entrée négative des modules en présentant une impédance de sortie positive.

9. Alimentation selon la revendication 7 ou 8, caractérisée en ce que le filtre comporte une cellule de filtrage LC, et en ce que le condensateur Ca est environ 5 à 10 fois plus grand que le condensateur C, et la résistance Ra est inférieure ou égale au module de l'impédance d'entrée d'un convertisseur.

10. Alimentation à découpage, caractérisée en ce qu'elle comporte un dispositif de filtrage selon l'une quelconque des revendications 1 à 9.

FIG_1

FIG_2

FIG_3

FIG_4

0166643

2/2

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 290 101  (HERGENHAN)<br>* Colonne 1, ligne 63 - colonne 4, ligne 6 * | 1-3,5 | H 02 M  3/335 |
| Y | | 4,6-9 | |
| | --- | | |
| Y | EP-A-0 096 370  (NIPPON CHEMI-CON)<br>* Figure 1 * | 4 | |
| | --- | | |
| Y | US-A-4 433 370  (KARADSHEH)<br>* Figure 10 * | 6 | |
| | --- | | |
| Y | US-A-4 208 705  (HOSOYA)<br>* Figure 1 * | 7,8 | |
| | --- | | |
| Y | US-A-4 092 709  (VOIGT)<br>* Figure 1 * | 9 | DOMAINES TECHNIQUES RECHERCHES (Int. Cl.4)<br><br>H 02 M  3/00 |
| | ----- | | |

Le présent rapport de recherche a été établi pour toutes les revendications

| Lieu de la recherche | Date d'achèvement de la recherche | Examinateur |
|---|---|---|
| LA HAYE | 13-08-1985 | BERTIN M.H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82